# EUROPEAN PATENT SPECIFICATION

(11) **EP 3 725 552 B1**
(45) Date of publication and mention of the grant of the patent: **06.09.2023**
(21) Application number: 18888324.3
(22) Date of filing: 15.06.2018
(51) Int. Cl.: B60C 11/01, B60C 9/18, B60C 11/00

(54) **HEAVY-DUTY TIRE**
SCHWERLASTREIFEN
PNEU POIDS LOURD

(30) Priority: 12.12.2017 JP 2017237700
(43) Date of publication of application: 21.10.2020
(73) Proprietor: Bridgestone Corporation, Chuo-Ku Tokyo 104-8340 (JP)
(72) Inventor: NAKASATO, Reo, Tokyo 104-8340 (JP); SATO, Taiki, Tokyo 104-8340 (JP)
(74) Representative: Marks & Clerk LLP
(86) International application number: PCT/JP2018/023000
(87) International publication number: WO 2019/116611

(56) References cited:
- WO-A1-2013/077427
- JP-A- 2000 103 206
- JP-A- 2004 066 851
- JP-A- 2010 132 045
- JP-A- 2010 280 322
- JP-A- 2015 034 004
- JP-A- 2017 019 483
- JP-A- 2017 071 277
- US-A- 2 972 368

## Description

### Technical Field

The present invention relates to a heavy duty tire.

### Background Art

Due to their load bearing capability and size, heavy duty tires are liable to experience a rise in temperature in the vicinity of a buttress portion. The buttress portion undergoes repeated distortion as it repeatedly contacts and moves away from the road surface during travel, causing heat to be generated in the buttress portion. Consideration has therefore been given to forming recess portions in such a buttress portion such that air flows into the recess portions and cools the buttress portion. A tire disclosed in Japanese National-Phase Publication 2009-542528 is an example of a tire in which recess portions are formed in a buttress portion.

Attention is also drawn to the following disclosures: JP 2010-132045 A, JP 2004-066851 A, JP 2010-280322 A, JP 2017-019483 A, JP 2000-103206 A, WO 2013/077427 A1, JP 2015-034004 A and US 2 972 368 A.

JP 2017-071277 A discloses a heavy duty tire comprising a recess portion that is formed in a buttress portion and that opens toward a tire outside; and air entry and exit promotion portions, each of which is linked to a side portion of the recess portion, that is open toward the tire outside, and that includes a slope from a surface of the tire toward a bottom portion of the recess portion, such that a depth dimension from the tire surface gradually increases; an average incline angle of the slope with respect to the tire surface is about 45°; and the air entry and exit promotion portions is disposed at two locations.

### SUMMARY OF INVENTION

### Technical Problem

Forming recess portions in the buttress portion enables the buttress portion to be cooled to a certain extent. However, larger loads result in greater distortion and thus increase the amount of heat generated, and there is therefore demand for improved cooling capability.

In consideration of the above circumstances, an object of the present invention is to provide a heavy duty tire with improved buttress portion cooling capability.

### Solution to Problem

A heavy duty tire according to the present invention is provided as claimed in claim 1.

If the average incline angle of the slope with respect to the tire surface were greater than 45°, it would be difficult to redirect air flowing along the tire surface so as to follow the slope.

### Advantageous Effects of Invention

The heavy duty tire of the present invention enables the buttress portion cooling capability to be improved.

### BRIEF DESCRIPTION OF DRAWINGS

Fig. 1 is a cross-section illustrating the vicinity of a buttress portion of a heavy duty tire according to an exemplary embodiment.
Fig. 2 is a side view illustrating the vicinity of a buttress portion of a heavy duty tire according to an exemplary embodiment.
Fig. 3 is a perspective view illustrating the vicinity of a buttress portion of a heavy duty tire according to an exemplary embodiment.
Fig. 4 is an enlarged plan view illustrating an air-cooling portion provided to a buttress portion.
Fig. 5(A) is a cross-section of the air-cooling portion illustrated in Fig. 4 as sectioned along line 5A-5A. Fig. 5(B) is a cross-section of the air-cooling portion illustrated in Fig. 4 as sectioned along line 5B-5B. Fig. 5(C) is a cross-section of the air-cooling portion illustrated in Fig. 4 as sectioned along line 5C-5C.
Fig. 6(A) to Fig. 6(D) are plan views schematically illustrating modified examples of air-cooling portions.

### DESCRIPTION OF EMBODIMENTS

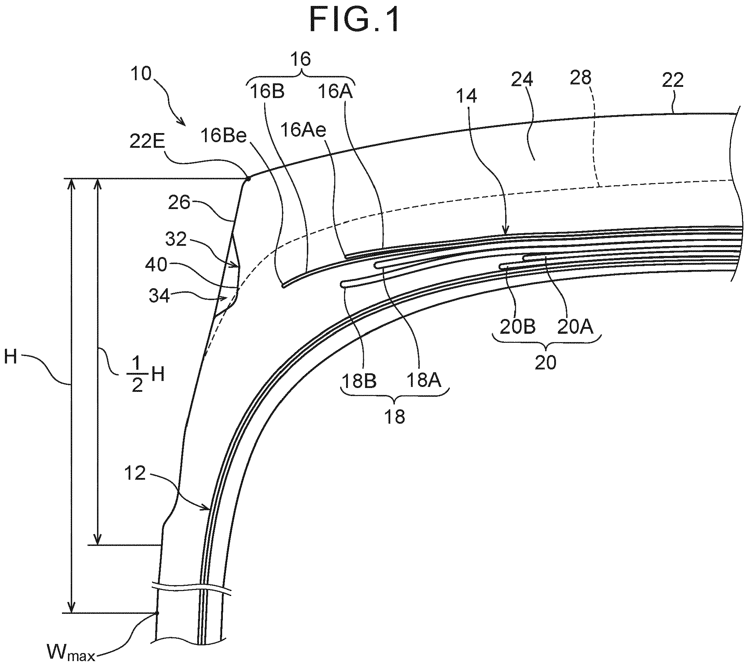

Explanation follows regarding a heavy duty tire 10 according to an exemplary embodiment in the present invention, with reference to Fig. 1 to Fig. 6. With the exception of air-cooling portions 32, described later, the structure of the heavy duty tire 10 of the present exemplary embodiment is configured similarly to a typical heavy duty pneumatic tire.

As illustrated in Fig. 1, the heavy duty tire 10 includes a carcass 12 that spans between a pair of non-illustrated bead cores.

### Belt Configuration

A belt 14 is laid at a tire radial direction outer side of the carcass 12. The belt 14 includes plural belt layers. Specifically, the heavy duty tire 10 according to the present exemplary embodiment includes a protective belt layer 16 configured of two protective belts 16A, 16B, a main intersecting belt layer 18 configured of two main intersecting belts 18A, 18B, and a small intersecting belt layer 20 configured of two small intersecting belts 20A, 20B. Note that the protective belts 16A, 16B, the main intersecting belts 18A, 18B, and the small intersecting belts 20A, 20B each have a typical structure in which plural cords arrayed parallel to each other are coated in covering rubber.

The main intersecting belt layer 18 is laid at the tire radial direction outer side of the small intersecting belt layer 20, and the protective belt layer 16 is laid at the tire radial direction outer side of the main intersecting belt layer 18.

As an example, in the heavy duty tire 10 of the present exemplary embodiment, an angle formed by the cords configuring the small intersecting belt layer 20 with respect to a tire circumferential direction is from 4° to 10°, an angle formed by the cords configuring the main intersecting belt layer 18 with respect to the tire circumferential direction is from 18° to 35°, and an angle formed by the cords configuring the protective belt layer 16 with respect to the tire circumferential direction is from 22° to 33°.

Explanation follows regarding widths of the respective belt layers making up the belt 14 of the present exemplary embodiment.

The width of the small intersecting belt 20Athat is at the tire radial direction outer side of and adjacent to the small intersecting belt 20B located at the tire radial direction innermost side is formed slightly narrower than the width of the small intersecting belt 20B.

The width of the main intersecting belt 18B that is at the tire radial direction outer side of and adjacent to the small intersecting belt 20A is formed wider than the widths of each of the small intersecting belts 20A, 20B.

The width of the main intersecting belt 18A that is at the tire radial direction outer side of and adjacent to the main intersecting belt 18B is formed wider than the widths of each of the small intersecting belts 20A, 20B, but narrower than the width of the main intersecting belt 18B.

The width of the protective belt 16B that is at the tire radial direction outer side of and adjacent to the main intersecting belt 18A is formed wider than the widths of each of the small intersecting belts 20A, 20B and the main intersecting belts 18A, 18B.

The width of the protective belt 16A that is at the tire radial direction outer side of and adjacent to the protective belt 16B and positioned at the outermost side of the belt 14 is formed narrower than the widths of each of the protective belt 16B and the main intersecting belt 18B, but wider than the respective widths of the small intersecting belts 20A, 20B and the main intersecting belt 18A. Note that the protective belt 16A is an example of an outermost belt ply in the tire radial direction.

The protective belt 16B that configures the fifth belt as counted from the radial direction inner side is formed with the maximum width in the belt 14. The protective belt 16B is an example of a maximum width belt ply.

Tread rubber 24 configuring a tread 22 is laid at the tire radial direction outer side of the belt 14. The tread rubber 24 extends along the carcass 12 to tire width direction outer sides of the belt 14, and parts of the tread rubber 24 laid at the tire width direction outer sides of the belt 14 each configure part of a buttress portion 26.

The buttress portion 26 of the present exemplary embodiment refers to a tire outside region spanning from a position located 1/2 × H from a tire maximum width portion Wmax to a ground contact edge 22E, H being a tire radial direction dimension between the tire maximum width portion Wmax and the ground contact edge 22E of the tread 22.

The ground contact edge 22E of the tread 22 assumes conditions under which the heavy duty tire 10 is fitted to a standard rim as specified in the 2017 Japanese Automobile Tyre Manufacturers Association (JATMA) Year Book, and is filled to an air pressure of 100% internal pressure (maximum pressure) corresponding to the maximum load capacity (the load given in bold in the internal pressure/load capacity correspondence table) for the applicable size and ply rating specified in the JATMA Year Book, such that heavy duty tire 10 is at its maximum load bearing capacity. Note that in cases in which TRA or ETRTO standards apply in the region of use or manufacture, the applicable standards are followed.

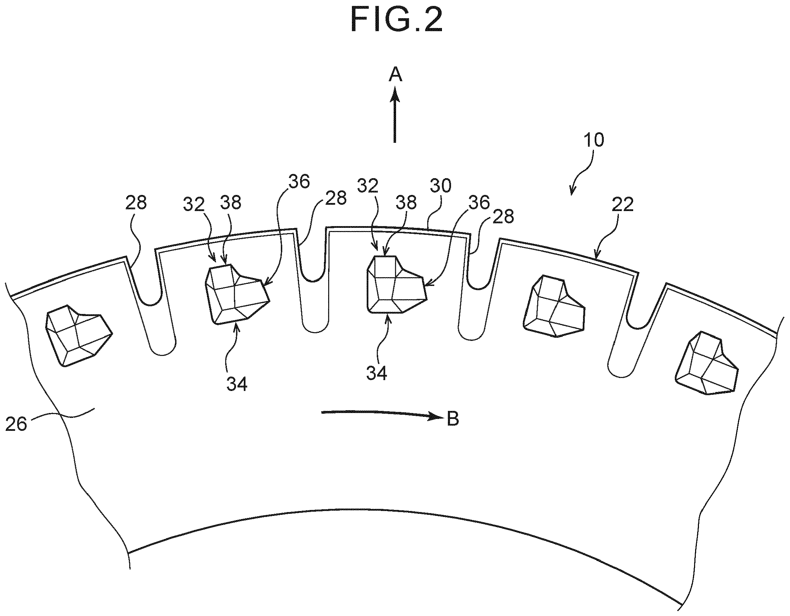

Plural lug grooves 28 are formed in the tread 22 of the heavy duty tire 10 around the tire circumferential direction. The lug grooves 28 formed in the tread 22 extend further toward the tire width direction outer sides than the ground contact edges 22E of the tread 22. As illustrated in Fig. 2, end portions of the lug grooves 28 open onto the buttress portions 26 of the heavy duty tire 10. Note that in the present exemplary embodiment, land portions formed between lug grooves 28 that are adjacent in the tire circumferential direction are referred to as lug blocks 30.

As illustrated in Fig. 1 to Fig. 3, the concave air-cooling portions 32 are formed in the buttress portions 26. In the present exemplary embodiment, the air-cooling portions 32 are formed to side faces of the respective lug blocks 30 partitioned by the lug grooves 28 (to the buttress portion 26).

### Detailed Configuration of Air-cooling portion

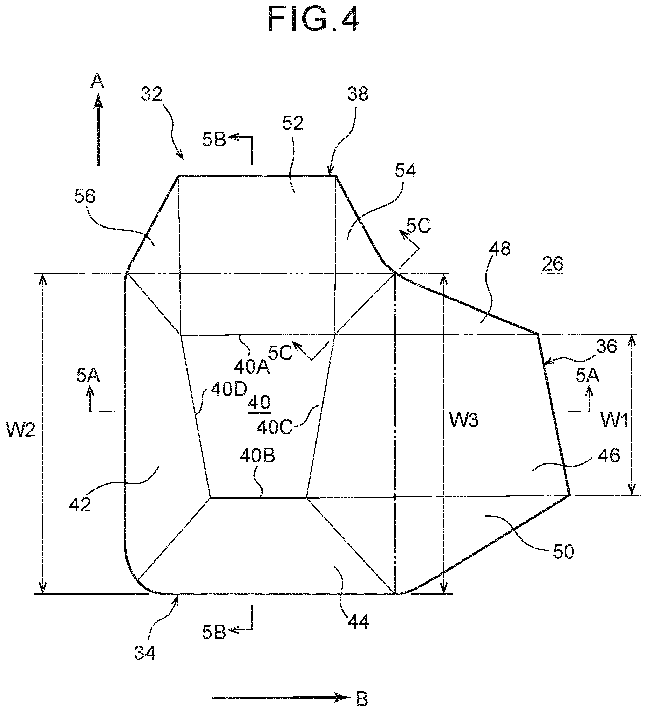

As illustrated in Fig. 4, each of the air-cooling portions 32 is configured including a recess portion 34, a first air entry and exit promotion portion 36 serving as an example of an air entry and exit promotion portion, and a second air entry and exit promotion portion 38. Each of the air entry and exit promotion portions is a location linked to a side portion of the recess portion 34 so as to be open toward the tire outside, and has a depth dimension from the tire surface that gradually increases on progression from the tire surface of the buttress portion 26 toward a bottom portion 40 of the recess portion 34. When viewed in plan view, a combined surface area of slopes 46, 52 is greater than a surface area of the bottom portion 40 of the recess portion 34.

### Detailed Configuration of Recess Portion

First, explanation follows regarding the recess portion 34. As illustrated in Fig. 1 to Fig. 3, the recess portions 34 are formed to the buttress portions 26 so as to open toward the tire outside. As illustrated in Fig. 4, in plan view the recess portion 34 includes the bottom portion 40 that has a trapezoidal shape in which a bottom side 40A at the tire radial direction outer side (arrow A direction side) has a greater width than an upper side 40B at the tire radial direction inner side. Note that the bottom side 40A and the upper side 40B are parallel to a direction tangential to the tire circumferential direction (arrow B direction), and a side 40C of the bottom portion 40 at a tire rotation direction front (arrow B direction) side and a side 40D of the bottom portion 40 on the opposite side to the tire rotation direction front side are inclined with respect to the tire radial direction (arrow A direction).

Note that although the bottom portion 40 is trapezoidal shaped in the present exemplary embodiment, the bottom portion 40 may be another polygonal shape such as a square, rectangular, or triangular shape, or may be circular or elliptical in shape.

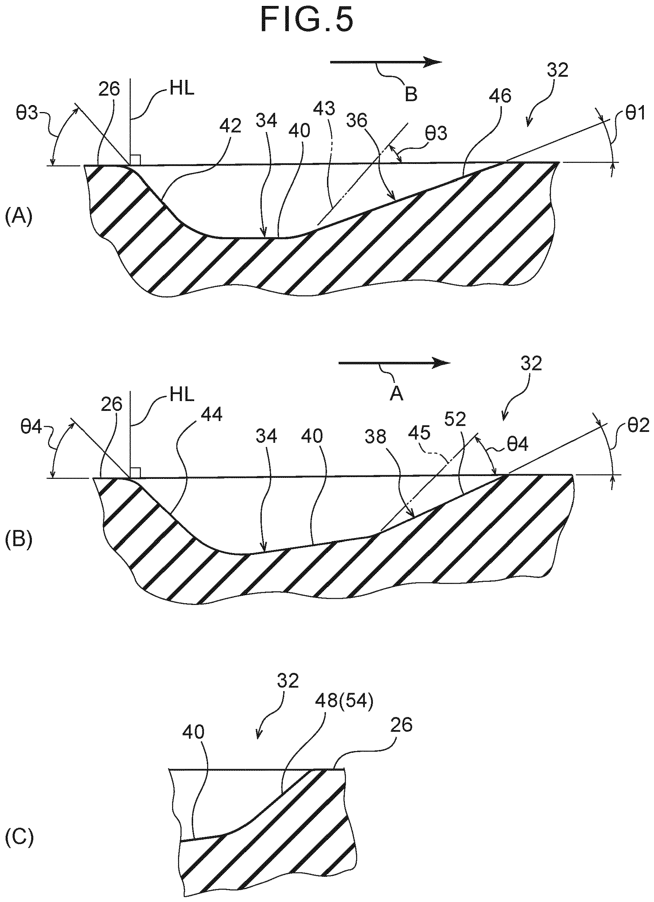

Although the depth of the bottom portion 40 is uniform along the direction toward the tire rotation direction front (arrow B direction) as illustrated in Fig. 5(A), the bottom portion 40 is inclined such that its depth gradually becomes shallower on progression from the tire radial direction inner side toward the tire radial direction outer side (arrow A direction side) as illustrated in Fig. 5(B). Note that the bottom portion 40 may also be inclined with respect to a direction running along the tire rotation direction (arrow B direction). Alternatively, the bottom portion 40 may have a uniform depth in a direction running along the tire radial direction (arrow A).

As illustrated in Fig. 1, in the recess portion 34 of the present exemplary embodiment, the bottom portion 40 is disposed at the tire width direction outer side of a tire width direction end portion 16Be of the protective belt 16B, this being formed with the maximum width in the belt 14. In the present exemplary embodiment, the tire width direction end portion 16Be of the protective belt 16B is positioned at the tire width direction inner side of a tire radial direction center portion of the recess portion 34. More specifically, the tire width direction end portion 16Be is disposed between the bottom side 40A and the upper side 40B of the bottom portion 40 (see Fig. 4) so as to be closer to the upper side 40B.

As illustrated in Fig. 4, a recess sidewall 42 configuring part of the recess portion 34 is formed on the opposite side of the bottom portion 40 to the tire rotation direction front (arrow B direction) side. A recess sidewall 44 configuring another part of the recess portion 34 is formed at the tire radial direction inner side of the bottom portion 40 (on the opposite side to the arrow A direction).

As illustrated in Fig. 5(A), the recess sidewall 42 is inclined with respect to a normal line HL that runs perpendicular to the surface of the buttress portion 26. A theoretical recess sidewall 43 is inclined at the same angle but in the opposite direction to the recess sidewall 42 on the tire rotation direction front (arrow B direction) side of the bottom portion 40. As illustrated in Fig. 5(B), the recess sidewall 44 is also inclined with respect to a normal line HL that runs perpendicular to the surface of the buttress portion 26. A theoretical recess sidewall 45 is inclined at the same angle but in the opposite direction to the recess sidewall 44 at the tire radial direction outer (arrow A direction) side of the bottom portion 40. In such a configuration, the recess portion 34 would be formed so as to widen on progression from the bottom portion 40 toward the tire outside.

### First Air Entry and Exit Promotion portion

Next, explanation follows regarding the first air entry and exit promotion portion 36.

As illustrated in Fig. 4 and Fig. 5(A), the first air entry and exit promotion portion 36 is disposed at the tire rotation direction front (arrow B direction) side of the recess portion 34. The first air entry and exit promotion portion 36 has a trapezoidal shape in plan view, and is a concave portion including the slope 46 that is inclined from the surface of the buttress portion 26 at the tire rotation direction front side (arrow B direction side) toward the bottom portion 40 of the recess portion 34. Note that the slope 46 connects smoothly to the bottom portion 40.

Note that although in the present exemplary embodiment an example is given in which the slope 46 has a trapezoidal shape in plan view, the slope 46 may be formed with another polygonal shape in plan view, depending on the inclination direction of the bottom portion 40 (the extension direction of the side 40C), and the surface profile of the buttress portion 26.

A sidewall 48 that has a steeper incline that the slope 46 is formed at the tire radial direction outer side (arrow A direction side) of the slope 46, and a sidewall 50 that has a steeper incline than the slope 46 is formed at the tire radial direction inner side of the slope 46. The angle formed by the sidewall 48 with respect to the slope 46 is greater than the angle formed by the sidewall 50 with respect to the slope 46.

A shortest distance along the slope 46 from the side 40C to the surface of the buttress portion 26 is longer than a shortest distance along the recess sidewall 42 from the side 40D to the surface of the buttress portion 26.

As illustrated in Fig. 4, the width of the first air entry and exit promotion portion 36 in the tire radial direction gradually increases on progression from the tire rotation direction front side toward the recess portion 34. In other words, W3 > W1 when W1 is the width of a tire rotation direction front side end portion of the first air entry and exit promotion portion 36, and W3 is the width of the first air entry and exit promotion portion 36 on the recess portion 34 side (the width of a portion connected to the recess portion 34 as measured along the tire radial direction). The width of the slope 46 is uniform, whereas the widths of the sidewalls 48, 50 gradually increase on progression from the tire rotation direction front side toward the recess portion 34. Note that the width of the first air entry and exit promotion portion 36 may be uniform on progression from the tire rotation direction front side toward the recess portion 34.

Furthermore, in the present exemplary embodiment, the width W3 of the first air entry and exit promotion portion 36 on the recess portion 34 side as measured at the tire surface is set so as to be the same as a (tire radial direction) width W2 of the recess portion 34 at the tire surface. Note that the double-dotted dashed lines (imaginary lines) in Fig. 4 indicate the extent of the opening of the recess portion 34 were the first air entry and exit promotion portion 36 and the second air entry and exit promotion portion 38 not formed thereto.

As illustrated in Fig. 5(A) and Fig. 5(B), the slope 46 has a gentler incline than the recess sidewall 42 and the recess sidewall 44 of the recess portion 34. An average incline angle θ1 of the slope 46 with respect to the surface of the buttress portion 26 is no greater than 45°. If the average incline angle θ1 were greater than 45°, it would be difficult to redirect air flowing along the tire surface so as to follow the slope 46. Note that the average incline angle θ1 may be within a range of from 5° to 30°. If the average incline angle θ1 were smaller than 5°, the cooling effect would be diminished. Note that the average incline angle θ1 may be within a range of from 15° to 25°.

Note that in cross-section the slope 46 forms a straight line running from the side 40C to the surface of the buttress portion 26. Due to forming a straight line in this manner, the slope 46 has a uniform incline angle, such that air inflow and outflow directions can be easily made to follow the slope 46.

### Second Air Entry and Exit Promotion Portion

Next, explanation follows regarding the second air entry and exit promotion portion 38.

As illustrated in Fig. 4, the second air entry and exit promotion portion 38 is disposed on the tire radial direction outer (arrow A direction) side of the recess portion 34. As illustrated in Fig. 5(B), in cross-section the second air entry and exit promotion portion 38 is a concave portion including the slope 52 that is inclined from the surface of the buttress portion 26 toward the bottom portion 40 of the recess portion 34. The slope 52 has a substantially square shape in plan view. The slope 52 connects smoothly to the bottom portion 40.

Note that although the slope 52 has a substantially square shape in the present exemplary embodiment, the slope 52 may have another polygonal shape such as a rectangular or trapezoidal shape.

As illustrated in Fig. 4, a sidewall 54 that has a steeper incline that the slope 52 is formed at the tire rotation direction front side (arrow B direction side) of the slope 52, and a sidewall 56 that has a steeper incline than the slope 52 is formed at the tire rotation direction rear side of the slope 52. The angles formed by the sidewalls 54, 56 with respect to the slope 52 are substantially the same as one another. In the second air entry and exit promotion portion 38 of the present exemplary embodiment, the width dimension (the dimension in a direction intersecting the incline direction of the slope 52) at the tire radial direction outer side is formed relatively smaller than the width dimension at the recess portion 34 side. A shortest distance along the slope 52 from the bottom side 40A to the surface of the buttress portion 26 is longer than a shortest distance along the recess sidewall 44 from the upper side 40B to the surface of the buttress portion 26.

Note that the width of the slope 52 is uniform from the bottom portion 40 of the recess portion 34 toward the tire radial direction outer side.

Note that end portions of the sidewall 54 of the second air entry and exit promotion portion 38 and the sidewall 48 of the first air entry and exit promotion portion 36 previously described are connected to one another. Moreover, end portions of the sidewall 50 of the first air entry and exit promotion portion 36 and the recess sidewall 44 of the recess portion 34 are also connected to one another.

The slope 52 has a gentler incline than the recess sidewall 42 and the recess sidewall 44 of the recess portion 34. As illustrated in Fig. 5(B), similarly to the average incline angle θ1 of the slope 46 of the first air entry and exit promotion portion 36, an average incline angle θ2 of the slope 52 with respect to the surface of the buttress portion 26 is no greater than 45°. If the average incline angle θ2 were greater than 45°, it would be difficult to redirect air flowing along the tire surface so as to follow the slope 52. Note that the average incline angle θ2 may be within a range of from 5° to 30°. If the average incline angle θ2 were smaller than 5°, the cooling effect would be diminished. The average incline angle θ2 may be within a range of from 15° to 25°.

Note that in cross-section the slope 52 forms a straight line running from the bottom side 40A to the surface of the buttress portion 26. Due to forming a straight line in this manner, the slope 52 has a uniform incline angle, such that air inflow and outflow directions can be easily made to follow the slope 52.

As illustrated in Fig. 5(A) and Fig. 5(B), the average incline angle θ1 of the slope 46 and the average incline angle θ2 of the slope 52 are both smaller than an average incline angle θ3 of the recess sidewall 42 and an average incline angle θ4 of the recess sidewall 44 of the recess portion 34. In other words, the average incline angles θ3, θ4 are both greater than the incline angles of the slopes 46, 52. The average incline angles θ3, θ4 are preferably both greater than 40°.

Note that in cross-section, the recess sidewall 44 and the recess sidewall 42 each have a rounded profile at a boundary with the surface of the buttress portion 26. This enables distortion of the buttress portion 26 under load to be suppressed.

Note that Fig. 5(C) is a cross-section of the air-cooling portion illustrated in Fig. 4 as sectioned along line 5C-5C.

As illustrated in Fig. 4, in the air-cooling portion 32 of the present exemplary embodiment, an end portion on the recess portion 34 side of the slope 46 of the first air entry and exit promotion portion 36 is linked to the entire side 40C at the tire rotation direction front side of the bottom portion 40 of the recess portion 34. Moreover, an end portion on the recess portion 34 side of the slope 52 of the second air entry and exit promotion portion 38 is linked to the entire bottom side 40A at the tire radial direction outer side of the bottom portion 40 of the recess portion 34.

### Operation and Advantageous Effects

Explanation follows regarding operation and advantageous effects of the heavy duty tire 10 of the present exemplary embodiment.

As the heavy duty tire 10 rotates while traveling, the tread 22 repeatedly contacts and moves away from the road surface. The tread 22 therefore undergoes repeated distortion, thereby generating a large amount of heat, particularly at the buttress portion 26.

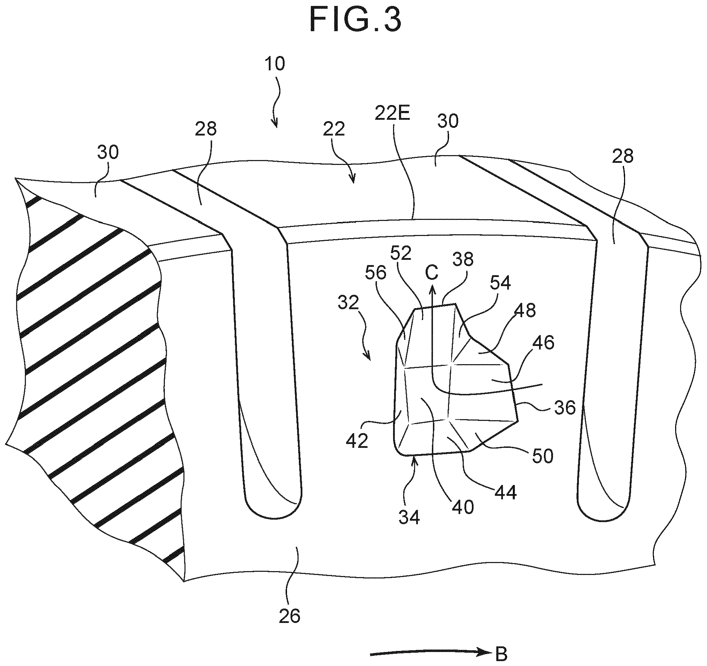

Moreover, as the heavy duty tire 10 rotates while traveling, a difference in speed arises between the tire surface and the surrounding air, causing air to flow into the recess portions 34 of the air-cooling portions 32 formed to the buttress portions 26. Specifically, as illustrated by the arrow C in Fig. 3, air at the tire rotation direction front side of the air-cooling portion 32 flows into the recess portion 34 through the first air entry and exit promotion portion 36 on the tire rotation direction front side. The air that has flowed into the recess portion 34 then flows along the bottom portion 40 of the recess portion 34 so as to cool the bottom portion 40 of the recess portion 34.

The average incline angle θ1 of the slope 46 of the first air entry and exit promotion portion 36 with respect to the tire surface is no greater than 45°, and the slope 46 connects to the bottom portion 40 of the recess portion 34 at a gentler incline than the recess sidewall 42 and the recess sidewall 44 of the recess portion 34. This enables air at the tire rotation direction front side of the recess portion 34 to be smoothly directed along the slope 46 and into the recess portion 34. Moreover, the air that has flowed into the recess portion 34 flows along the bottom portion 40 of the recess portion 34, enabling the bottom portion 40 to be effectively cooled. Namely, the air-cooling portion 32 including the first air entry and exit promotion portion 36 promotes the inflow of air toward the recess portion 34 compared to cases in which the first air entry and exit promotion portion 36 is not present, enabling the buttress portion 26 to be more effectively cooled.

The air flowing along the bottom portion 40 is then dispelled to the tire exterior along the slope 52 of the second air entry and exit promotion portion 38 disposed at the tire radial direction outer side of the recess portion 34, thereby enabling air that has flowed in from the tire rotation direction front side to be dispelled to the tire outside in turn. Thus, the air-cooling portion 32 promotes the inflow of air into the recess portion 34 compared to cases in which the second air entry and exit promotion portion 38 is not present, enabling the buttress portion 26 to be more effectively cooled.

In this manner, the air entry and exit promotion portions, namely the first air entry and exit promotion portion 36 and the second air entry and exit promotion portion 38, are disposed at two locations in the present exemplary embodiment, thereby enabling openings for air to enter and exit the recess portion 34 to be secured, and thus enabling airflow to be improved.

Furthermore, when the second air entry and exit promotion portion 38 at the tire radial direction outer side of the recess portion 34 is positioned at the front side of the recess portion 34 in the direction of progress of the tire, inflow of air traveling toward the rear in the direction of progress of the tire (translational airflow) through this second air entry and exit promotion portion 38 and toward the bottom portion 40 of the recess portion 34 can be promoted.

Note that if the average incline angle θ1 of the slope 46 of the first air entry and exit promotion portion 36 were greater than 45°, it would be difficult to redirect the air flowing along the tire surface so as to follow the slope 46. If the average incline angle θ1 of the slope 46 of the first air entry and exit promotion portion 36 were smaller than 5°, the cooling effect of the recess portion 34 would be diminished. Similar applies to the average incline angle θ2 of the slope 52 of the second air entry and exit promotion portion 38.

As illustrated in Fig. 4, in the air-cooling portion 32 of the present exemplary embodiment, the recess portion 34 side end portion of the slope 46 of the first air entry and exit promotion portion 36 is linked to the entire side 40C at the tire rotation direction front side of the bottom portion 40 of the recess portion 34. Moreover, the recess portion 34 side end portion of the slope 52 of the second air entry and exit promotion portion 38 is linked to the entire side 40A at the tire radial direction outer side of the bottom portion 40 of the recess portion 34. Thus, air flowing in through the first air entry and exit promotion portion 36 can be made to flow in across the entire width of the bottom portion 40 of the recess portion 34 and flow out through the second air entry and exit promotion portion 38, enabling the bottom portion 40 to be effectively cooled. Air can be also be made to efficiently flow in through the second air entry and exit promotion portion 38.

As the heavy duty tire 10 rotates, the temperature of the tread 22 is liable to rise in the vicinity of the belt 14 where the width of the belt 14 is at its maximum, namely, in the vicinity of the tire width direction end portion 16Be of the protective belt 16B where the width of the belt 14 configuration is at its maximum.

In the present exemplary embodiment, the bottom portion 40 of the recess portion 34 of the air-cooling portion 32 is disposed at the tire width direction outer side of the tire width direction end portion 16Be of the protective belt 16B, and is positioned near to the tire width direction end portion 16Be of the protective belt 16B where the temperature is most liable to rise. This enables heat generated near to the tire width direction end portion 16Be of the protective belt 16B to be effectively dissipated to the tire exterior through the bottom portion 40 of the recess portion 34, enabling the rise in temperature near to the tire width direction end portion 16Be of the maximum width protective belt 16B to be effectively suppressed.

Moreover, in the heavy duty tire 10 of the present exemplary embodiment, the tire width direction end portion 16Be of the protective belt 16B is positioned at the tire width direction inner side of the tire radial direction center portion of the bottom portion 40 of the recess portion 34, thereby enabling a tire radial direction inner side portion and tire radial direction outer side portion of the tire width direction end portion 16Be to be evenly cooled.

### Other Exemplary Embodiments

An exemplary embodiment in the present invention has been described above. However, the present invention is not limited to the above description, and obviously various other modifications may be implemented within the scope of the appended claims.

In the above exemplary embodiment, the first air entry and exit promotion portion 36 is disposed at the tire rotation direction front side of the recess portion 34 and the second air entry and exit promotion portion 38 is disposed at the tire radial direction outer side of the recess portion 34 as examples of air entry and exit promotion portions in two or more locations. However, the placement and number of air entry and exit promotion portions are not limited thereto.

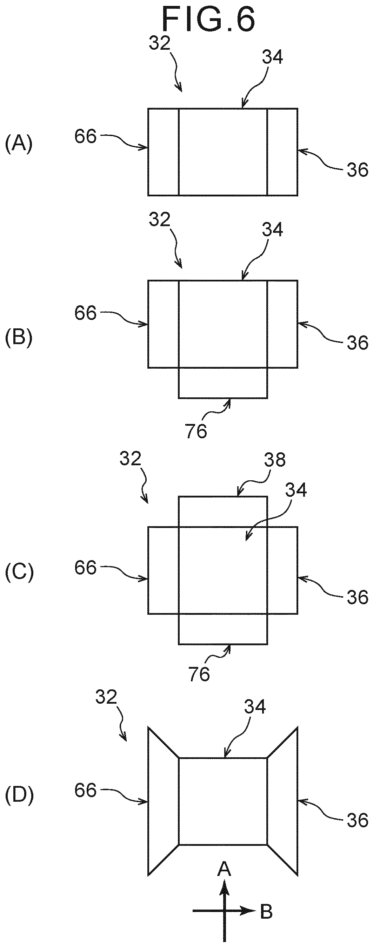

Explanation follows regarding modified examples in which positional relationships and so on of the air entry and exit promotion portions and the recess portion 34 have been modified. Figs. 6 are plan views schematically illustrating modified examples of the air-cooling portion 32, in which only the bottom portion of the recess portion 34 and the slopes of the air entry and exit promotion portions are illustrated.

In the example illustrated in Fig. 6(A), air entry and exit promotion portions (the first air entry and exit promotion portion 36 and a third air entry and exit promotion portion 66) are disposed at two locations at the two tire circumferential direction sides of the recess portion 34.

In the example illustrated in Fig. 6(B), in addition to the configuration of Fig. 6(A) a fourth air entry and exit promotion portion 76 is formed at the tire radial direction inner side of the recess portion 34. Namely, air entry and exit promotion portions are formed at three locations in this example.

In the example illustrated in Fig. 6(C), the second air entry and exit promotion portion 38 is formed in addition to the configuration of Fig. 6(B). Namely, air entry and exit promotion portions are formed at four locations in this example.

In the example illustrated in Fig. 6(D), the first air entry and exit promotion portion 36 and the third air entry and exit promotion portion 66 are disposed at two locations at the two tire circumferential direction sides of the recess portion 34. The tire radial direction widths of the first air entry and exit promotion portion 36 and the third air entry and exit promotion portion 66 gradually increase on progression away from the recess portion 34.

Although the tire width direction end portion 16Be of the belt ply (the protective belt 16B) where the width of the belt configuration is at its maximum is positioned at the tire width direction inner side of the bottom portion 40 of the recess portion 34, the tire width direction end portion 16Be may be disposed at a position that is displaced slightly from the tire width direction inner side of the bottom portion 40 of the recess portion 34.

Although the bottom portion 40 of the recess portion 34 is not positioned at the tire width direction outer side of a tire width direction end 16Ae of the protective belt 16A disposed at the tire radial direction outermost side of the belt 14 in the illustrated example, the bottom portion 40 may be extended toward the tire radial direction outer side such that the bottom portion 40 of the recess portion 34 is positioned at the tire width direction outer side of the tire width direction end 16Ae of the protective belt 16A at the outermost side.

Cracks may develop at the surface of the tread 22 when the heavy duty tire 10 travels along rough roads or the like. When heat is generated such that the temperature rises in the vicinity of the tire width direction end 16Ae of the protective belt 16A at the tire radial direction outermost side, the durability of the tread rubber 24 surrounding the vicinity of the tire width direction end 16Ae is reduced, and cracks that have developed on the surface of the tread 22 might advance toward the rubber portion where the durability is reduced.

Disposing the bottom portion 40 of the recess portion 34 at the tire width direction outer side of the tire width direction end 16Ae of the protective belt 16A at the tire radial direction outermost side enables the bottom portion 40 to be brought closer to the tire width direction end 16Ae. This enables the rise in temperature near to the tire width direction end 16Ae to be suppressed, enabling the durability of the tread rubber 24 near to the tire width direction end 16Ae to be maintained, and enabling cracks at the surface of the tread 22 to be suppressed from advancing toward the tread rubber 24 near to the tire width direction end 16Ae.

Although when viewed in plan view the combined surface area of the slopes 46, 52 is greater than the surface area of the bottom portion 40 of the recess portion 34 in the above exemplary embodiment, this combined surface area may be equal to or less than the surface area of the bottom portion 40 of the recess portion 34.

Although the end portion of the first air entry and exit promotion portion 36 on the opposite side to the recess portion 34 side terminates at the tire surface of the buttress portion 26 in the above exemplary embodiment, the end portion of the first air entry and exit promotion portion 36 on the opposite side to the recess portion 34 side may be linked to (open onto) a lug groove 28 (not illustrated in the drawings). This enables air in the lug groove 28 to be made to flow into the recess portion 34 in addition to air from the tire side face. Although the end portion of the second air entry and exit promotion portion 38 on the opposite side to the recess portion 34 side terminates at the tire surface of the buttress portion 26 in the above exemplary embodiment, the end portion of the second air entry and exit promotion portion 38 on the opposite side to the recess portion 34 side may be linked to (open onto) a lug groove 28 or a tread end (not illustrated in the drawings).

## Claims

1. A heavy duty tire (10) comprising:
a recess portion (34) that is formed in a buttress portion (26) and that opens toward a tire outside; and
air entry and exit promotion portions (36, 38, 66, 76), each of which is linked to a side portion of the recess portion (34), that is open toward the tire outside, and that includes a slope (46, 52) from a surface of the tire toward a bottom portion (40) of the recess portion (34), such that a depth dimension from the tire surface gradually increases;
an average incline angle of the slope (46, 52) with respect to the tire surface being no greater than 45°; and
the air entry and exit promotion portions (36, 38, 66, 76) being disposed at two or more locations,
wherein the air entry and exit promotion portions (36, 38, 66, 76) are disposed at least at two locations corresponding to two tire circumferential direction sides of the recess portion (34).

2. The heavy duty tire (10) of claim 1, wherein the air entry and exit promotion portions (36, 38, 66, 76) are disposed at three locations.

3. The heavy duty tire (10) of claim 1, wherein the air entry and exit promotion portions (36, 38, 66, 76) are disposed at four locations.

4. The heavy duty tire (10) of any one of claim 1 to claim 3, wherein a tire width direction end portion of a maximum width belt ply that configures a belt is positioned at a tire width direction inner side of the bottom portion (40) of the recess portion (34).

5. The heavy duty tire (10) of claim 4, wherein the tire width direction end portion (16Be) of the maximum width belt ply (16B) is positioned at the tire width direction inner side of a tire radial direction center portion of the bottom portion (40).

6. The heavy duty tire (10) of any one of claim 1 to claim 5, wherein a combined surface area of the slopes (46, 52) when viewed in plan view is larger than a surface area of the bottom portion (40) of the recess portion (34) when viewed in plan view.

## Patentansprüche

1. Schwerlastreifen (10), der Folgendes umfasst:
einen Aussparungsabschnitt (34), der in einem Pfeilerabschnitt (26) ausgebildet ist und der sich hin zu einer Reifenaußenseite öffnet; und
Lufteintritts- und -austrittsförderungsabschnitte (36, 38, 66, 76), deren jeder mit einem Seitenabschnitt des Aussparungsabschnitts (34) verknüpft ist, der hin zu der Reifenaußenseite offen ist. und der eine Schräge (46, 52) von einer Oberfläche des Reifens hin zu einem Bodenabschnitt (40) des Aussparungsabschnitts (34) einschließt, sodass eine Tiefenabmessung von der Reifenoberfläche allmählich zunimmt;
wobei ein durchschnittlicher Neigungswinkel der Schräge (46, 52) in Bezug auf die Reifenoberfläche nicht größer als 45° ist; und
wobei die Lufteintritts- und -austrittsförderungsabschnitte (36, 38, 66, 76) an zwei oder mehr Stellen angeordnet sind,
wobei die Lufteintritts- und -austrittsförderungsabschnitte (36, 38, 66, 76) an mindestens zwei Stellen angeordnet sind, die zwei Seiten in Reifenumfangsrichtung des Aussparungsabschnitts (34) entsprechen.

2. Schwerlastreifen (10) nach Anspruch 1, wobei die Lufteintritts- und -austrittsförderungsabschnitte (36, 38, 66, 76) an drei Stellen angeordnet sind.

3. Schwerlastreifen (10) nach Anspruch 1, wobei die Lufteintritts- und -austrittsförderungsabschnitte (36, 38, 66, 76) an vier Stellen angeordnet sind.

4. Schwerlastreifen (10) nach einem der Ansprüche 1 bis 3, wobei ein Endabschnitt in Reifenbreitenrichtung einer Gürtellage maximaler Breite, die einen Gürtel konfiguriert, an einer in Reifenbreitenrichtung inneren Seite des Bodenabschnitts (40) des Aussparungsabschnitts (34) positioniert ist.

5. Schwerlastreifen (10) nach Anspruch 4, wobei der Endabschnitt (16Be) in Reifenbreitenrichtung der Gürtellage maximaler Breite (16B) an der in Reifenbreitenrichtung inneren Seite eines in Reifenradialrichtung mittleren Abschnitts des Bodenabschnitts (40) positioniert ist.

6. Schwerlastreifen (10) nach einem der Ansprüche 1 bis 5, wobei ein kombinierter Oberflächenbereich der Schrägen (46, 52), wenn sie in einer Draufsicht betrachtet werden, größer ist als ein Oberflächenbereich des Bodenabschnitts (40) des Aussparungsabschnitts (34), wenn er in einer Draufsicht betrachtet wird.

## Revendications

1. Pneumatique pour poids lourds (10), comprenant :
une partie évidée (34) qui est formée dans une partie de contrefort (26) et qui s'ouvre vers un extérieur du pneumatique ; et
des parties de promotion d'entrée et de sortie d'air (36, 38, 66, 76), chacune d'entre elles étant reliée à une partie latérale de la partie évidée (34), qui est ouverte vers l'extérieur du pneumatique, et qui inclut une pente (46, 52), d'une surface du pneumatique vers une partie inférieure (40) de la partie évidée (34), de sorte qu'une dimension de profondeur est progressivement accrue depuis la surface du pneumatique ;
un angle d'inclinaison moyen de la pente (46, 52) par rapport à la surface du pneumatique n'étant pas supérieur à 45° ; et
les parties de promotion d'entrée et de sortie d'air (36, 38, 66, 76) étant disposées au niveau de deux ou de plusieurs emplacements,
dans lequel les parties de promotion d'entrée et de sortie d'air (36 38, 66, 76) sont disposées au moins au niveau de deux emplacements correspondant à deux côtés, dans la direction circonférentielle du pneumatique, de la partie évidée (34).

2. Pneumatique pour poids lourds (10) selon la revendication 1, dans lequel les parties de promotion d'entrée et de sortie d'air (36, 38, 66, 76) sont disposées au niveau de trois emplacements.

3. Pneumatique pour poids lourds (10) selon la revendication 1, dans lequel les parties de promotion d'entrée et de sortie d'air (36, 38, 66, 76) sont disposées au niveau de quatre emplacements.

4. Pneumatique pour poids lourds (10) selon l'une quelconque des revendications 1 à 3, dans lequel une partie d'extrémité, dans la direction de la largeur du pneumatique, d'un pli de ceinture à largeur maximale qui configure une ceinture est positionnée au niveau d'un côté interne, dans une direction de la largeur du pneumatique, de la partie inférieure (40) de la partie évidée (34).

5. Pneumatique pour poids lourds (10) selon la revendication 4, dans lequel la partie d'extrémité (16Be), dans la direction de la largeur du pneumatique, du pli de ceinture à largeur maximale (16B) est positionnée au niveau du côté interne, dans la direction de la largeur du pneumatique, d'une partie centrale, dans la direction radiale du pneumatique, de la partie inférieure (40).

6. Pneumatique pour poids lourds (10) selon l'une quelconque des revendications 1 à 5, dans lequel une zone de surface combinée des pentes (46, 52), vues dans une vue en plan, est plus grande qu'une zone de surface de la partie inférieure (40) de la partie évidée (34), vues dans une vue en plan.
